# EUROPÄISCHE PATENTSCHRIFT

(11) **EP 1 926 922 B1**
(45) Veröffentlichungstag und Bekanntmachung des Hinweises auf die Patenterteilung: **05.01.2011**
(21) Anmeldenummer: 05796492.6
(22) Anmeldetag: 22.09.2005
(51) Int. Cl.: F16G 3/04

(54) **VERBINDERANORDNUNG, VERBINDERELEMENT UND HERSTELLUNGSVERFAHREN DAFÜR**
CONNECTOR ARRANGEMENT, CONNECTOR ELEMENT AND METHOD OF PRODUCING THE SAME
SYSTEME D'ASSEMBLAGE, ELEMENT D'ASSEMBLAGE ET PROCEDE DE FABRICATION ASSOCIE

(43) Veröffentlichungstag der Anmeldung: 04.06.2008
(73) Patentinhaber: Sefar AG, 8803 Rüschlikon (CH)
(72) Erfinder: LECHNER, Franz, 85567 Grafing (DE); PAUKER, Hermann, 83564 Soyen (DE)
(74) Vertreter: Wunderlich, Rainer
(86) Internationale Anmeldenummer: PCT/EP2005/010278
(87) Internationale Veröffentlichungsnummer: WO 2007/033698

(56) Entgegenhaltungen:
- FR-A- 1 065 983
- US-A- 5 542 527

## Beschreibung

Die vorliegende Erfindung betrifft·eine Verbinderanordnung zum Verbinden der Enden von ein oder zwei Bahnen aus einem flexiblen Material, sowie ein einzelnes Verbinderelement für eine solche Anordnung. Derartige Verbinderanordnungen werden beispielsweise eingesetzt; um zwei Enden eines Transportbandes, eines Filterbandes oder dergleichen zu einem Endlosband zusammenzufügen. Des weiteren betrifft die Erfindung ein Verfahren zum Herstellen eines Verbinderelements für eine solche Anordnung.

Aus DE 198 20 204 A1 ist eine Verbinderanordnung mit zwei aus Blech geformten Elementen bekannt, die jeweils an ein Ende einer Bahn angeklammert werden und über die Enden der Bahn hinausgreifende Schlaufen bilden, wobei zum Verbinden der Bahnenden jeweils die Schlaufen eines Elements in Zwischenräume zwischen.den Schlaufen des anderen Elements eingeführt und ein Draht durch die Schlaufen beider Elemente durchgesteckt wird, um die Verbinderelemente aneinander zu fixieren.

Diese Verbinderanordnung ist für den Einsatz in einer Filteranlage nicht optimal geeignet, da, wenn sie zum verbinden der Enden einer Filterbahn verwendet wird, in Höhe der ineinandergreifenden Schlaufen mit auszufilterndem Material beladene Flüssigkeit unvollständig gefiltert durchtreten kann.

Auch die Art der Befestigung der Verbinderelemente an den Bahnenden durch Hindurchstoßen von Metallklammern durch das Bahnmaterial ist nicht für jede Art von Bahn geeignet. Auf die Bahn wirkende Zugkräfte können dazu führen, dass sich an den Durchstichen Löcher in der Bahn bilden, durch die Flüssigkeit ungefiltert hindurchtreten kann, so dass die Bahn unbrauchbar wird.

DE 87 04 382 U1 versucht, das Problem der mangelhaften Dichtigkeit der Verbinderanordnung mit Hilfe einer flexiblen Schiene zu lösen, die, an dem durch die Schlaufen gesteckten Draht gehalten, elastisch gegen die Oberfläche der Bahn auf beiden Seiten der Verbinderanordnung drückt. Wenn der Kontakt zwischen der Schiene und der Bahn für die zu filternde Flüssigkeit dicht ist, kann diese die ineinandergreifenden Verbinderelement nicht erreichen und folglich auch nicht an undichten Stellen zwischen den Verbinderelementen oder am Übergang zwischen einem Verbinderelement und der daran befestigten Filterbahn hindurchtreten.

Die Notwendigkeit, beim Zusammenfügen der Bahnenden auch die Schiene zu befestigen, macht das Zusammenfügen von Bahnenden mit Hilfe dieser Verbinderanordnung mühselig, denn der eingeschobene Draht muss nicht nur die Verbinderelemente miteinander, sondern auch mit der Schiene zusammenhalten. Außerdem ist eine hohe Bahnspannung erforderlich, um sicherzustellen, dass die Kanten der Schiene fest genug auf die Zahnoberfläche drücken, um einen Durchtritt von ungefilterter Flüssigkeit zwischen der Bahnoberfläche und den Kanten der Schiene auszuschließen. Die hohe Spannung wiederum fördert den Verschleiß der Bahn.

Um eine Beschädigung der Bahnen durch hindurchgestoßene Metallklammern zu vermeiden, sind auch Verbinderanordnungen vorgeschlagen worden, deren Elemente jeweils an die Bahnenden angenäht sind. Hier besteht jedoch das Problem, dass die zum Nähen verwendeten Fäden dort, wo sie an der Oberfläche der Verbinderelemente frei liegen, aufgrund der Umlaufbewegung der Bahn einem starken Verschleiß ausgesetzt sind. Es besteht daher bei diesen Verbinderanordnungen die Gefahr, dass während des Betriebs die Fäden reißen und das Bahnende sich von dem daran genähten Verbinderelement löst.

Aus der US 5,542,527 und der FR 1,065,983 sind Verbinderelemente bekannt, die in einem Bereich, der zur Verbindung mit einem benachbarten Verbinderelement vorgesehen ist, eine Stufenstruktur aufweisen.

Eine Aufgabe der Erfindung ist, eine Verbinderanordnung zum Verbinden von Bahnenden anzugeben, die eine leicht zu schließende und zuverlässig dichte Verbindung zwischen zwei Bahnenden herstellt.

Diese Aufgabe wird gelöst durch eine Verbinderanordnung mit den Merkmalen des Anspruchs 1. Indem die drei Konturen der Elemente jeweils formschlüssig ineinander greifen und außerdem im Querschnitt eine Nut und eine Feder bilden, kann zuverlässig vermieden werden, dass sich zwischen den zwei Elementen im Betrieb Schlitze auftun, durch die eine zu filternde Flüssigkeit ungefiltert passieren kann.

Um die Verbinderelemente einfach fertigen zu können, sollten alle Konturen vorzugweise dieselbe Periode haben.

Der einfacheren Herstellung wegen sind vorzugsweise die zweiten und dritten Konturen, die in der zweiten und dritten Längsschnittebene beiderseits der ersten Langsschnittebene liegen, deckungsgleich.

zweckmäßig ist auch, dass die Konturen Rechteckkonturen sind.

Die Elemente der Verbinderanordnung sollten kongruent sein, so dass beide Elemente mit ein und demselben Formwerkzeug hergestellt werden können.

Weiterhin ist ein Verbinderelement angegeben, das eine zuverlässige und belastbare Befestigung eines Bahnendes an dem Verbinderelement durch Nähen erlaubt.

Es ist vorgesehen, dass der Schenkel des Verbinderelements, an welchem die Bahn festgenäht werden soll, an einer Außenseite mit Rillen versehen ist. Wenn die Fäden, mit denen die Bahn festgenäht ist, am dieser Außenseite in den Rillen verlaufen, sind sie von mechanischer Beanspruchung durch die Bahnbewegung geschützt, und eine zuverlässige und dauerhafte Befestigung der Bahn an dem Verbinderelement wird erreicht.

Zweckmäßigerweise erstrecken sich die Rillen in Längsrichtung des Verbinderelements.

Vorzugsweise weist das Verbinderelement jeweils zwei Schenkel der oben beschriebenen Art auf, die eine Nut zum Aufnehmen des Bahnendes begrenzen.

Die einfachste Möglichkeit, an einem solchen Schenkel Durchgangslöcher für einen Faden zu bilden, mit dem das Bahnende an dem Verbinderelement vernäht wird, ist, sie mit einer Nadel zu stechen. Dabei wird Material des Schenkels nicht entfernt, sondern allenfalls seitlich verdrängt. Das Durchstechen kann unmittelbar während des Nähens erfolgen; es ist aber auch möglich, das Nähen zu erleichtern, indem die Löcher bereits im Laufe der Herstellung des Verbinderelements erzeugt werden.

Manche Kunststoffe bilden beim Durchstechen mit einer Nadel eine Spitze aus, die das Durchstichloch der Nadel an der Austrittsseite umgibt. Eine solche Spitze fördert erheblich den Verschleiß einnes durch ein solches Loch gezogenen Fadens. Der Erfinder hat festgestellt, dass Polyurethan, Polyamid und Weich-PVC eine solche Spitze nicht ausbilden, so dass diese Materialien für die Herstellung des erfindungsgemäßen Verbinderelements bevorzugt sind.

Es besteht aber auch die Möglichkeit, die Durchgangslöcher für den Faden vorab zu bohren oder zu stanzen, anstatt sie mit einer Nadel zu stechen. In diesem Fall besteht die Gefahr der Ausbildung einer Spitze nicht, so dass zur Herstellung des Verbinderelements auch andere als die oben genannten Materialien vorteilhaft verwendet werden können.

Gegenstand der Erfindung ist ferner ein Verfahren zum Herstellen eines Verbinderelements für eine Verbinderanordnung der oben beschriebenen Art. Aufgrund der periodischen Konturen des Verbinderelements ist die Stranggusstechnik für dessen Herstellung ungeeignet. Herkömmliche Spritzgusstechniken können zwar verwendet werden, erlauben aber nur die Herstellung von Verbinderelementen mit fest definierten Längen. Es ist jedoch wünschenswert, die Verbinderelemente als kontinuierliche Profile mit unbestimmter Länge herstellen zu können. Zu diesem Zweck schlägt die Erfindung ein modifiziertes Spritzgussverfahren mit folgenden Schritten vor:
a) Bereitstellen einer Spritzgussform, die geeignet ist, einen Abschnitt des Verbinderelements darin zu formen, und die an einem Ende des Abschnitts offen ist;
b) Verschließen des offenen Endes;
c) Einspritzen von Material in die Form, um einen Abschnitt des Verbinderelements zu erhalten;
d) zyklisches Wiederholen der Schritte b) und c), wobei zum Verschließen der Form in Schritt b) jeweils der im vorhergehenden Schritt c) erhaltene Abschnitt verwendet wird.
   Aufgrund der Periodizität der Konturen des Verbinderelements ist es nämlich möglich, den im Schritt
c) erhaltenen Abschnitt des Verbinderelements zu entformen und anschließend um eine ganze Zahl von Perioden versetzt wieder in die Form einzufügen, so dass der Abschnitt zum Teil aus der Form herausragt und in der Form Platz geschaffen wird, in dem ein neuer Abschnitt an den zuvor erhaltenen angespritzt werden kann. Für dieses sukzessive Anspritzen ist Polyurethan als Wertstoff besonders geeignet.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine perspektivische Ansicht eines Ver- binderelements gemäß einer ersten Ausges- taltung der Erfindung;
- Fig. 2: einen Schnitt durch das Verbinderelement der Fig. 1 mit einem daran festgenähten Bahnende;
- Fig. 3: einen Längsschnitt durch zwei einander gegenüberliegende Verbinderelemente gemäß Fig. 1, die den Verlauf der einander zu- gewandten Konturen der Verbinderelemente in der Schnittebene sowie in einer zwei- ten Ebene erkennen lässt;
- Fig. 4: eine perspektivische Ansicht eines Ver- binderelements gemäß einer zweiten Aus- gestaltung der Erfindung;
- Fig. 5: einen zu Fig. 3 analogen Längsschnitt durch zwei einander gegenüberliegende Verbinderelemente gemäß Fig. 4;
- Fig. 6a bis 6e: Schritte der Herstellung eines Verbinderelements gemäß der vorliegenden Erfindung; und
- Fig. 7: eine perspektivische Ansicht eines Teils einer Spritzgussform, die in dem Verfahren gemäß Fig. 6a bis 6e verwendbar ist.

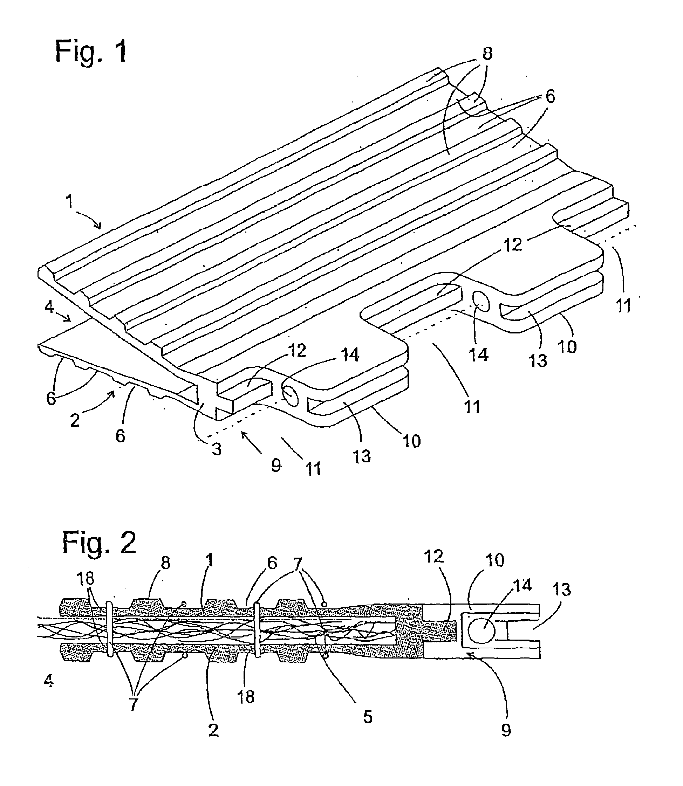

Fig. 1 ist eine detaillierte Ansicht eines Verbinderelements gemäß der vorliegenden Erfindung. Ein Hauptabschnitt des Verbinderelements hat die Form eines U-Profils mit Schenkeln 1, 2, die durch einen Steg 3 verbunden sind. Die von den Schenkeln 1, 2 begrenzte Nut 4 ist vorgesehen, um darin ein Ende einer Bahn, z.B. einer Filtermembran, eines Siebs, eines Transportbandes oder dergleichen durch Nähen zu befestigen. Das vernähte Bahnende 5 ist in Fig. 2 zu sehen. Die Schenkel 1, 2 weisen an ihren Außenseiten mehrere Rillen 6 auf, in denen die zum Vernähen des Bahnendes 5 verwendeten Fäden 7 geführt sind. Die Fäden 7 stehen nicht aus den Rillen 6 vor und sind daher durch die sich zwischen den Rillen 6 erstreckenden Rippen 8 vor Reibverschleiß geschützt. Stellenweise erstrecken sich die Fäden 7 durch in die Schenkel 12 gestochene Löcher 18 von einer Seite des Verbinderelements zur anderen und halten so das Bahnende 5 zwischen den Schenkeln 1, 2 eingeklemmt.

An der von den Schenkeln 1, 2 abgewandten Flanke 9 des Stegs 3 stehen jeweils durch Zahnzwischenräume 11 getrennte Zähne 10 ab. Die Ausdehnung in Längsrichtung des Profils ist bei allen Zähnen 10 und Zahnzwischenräumen 11 gleich. In den Zahnzwischenräumen 11 ist an der Flanke 9 jeweils eine längsverlaufende Feder 12 gebildet; die Zähne 10 weisen an ihrer Stirnseite jeweils eine Nut 13 auf, deren Breite der der Feder 12 entspricht. Außerdem verstrecken sich miteinander fluchtende Bohrungen 14 durch die Zähne 10.

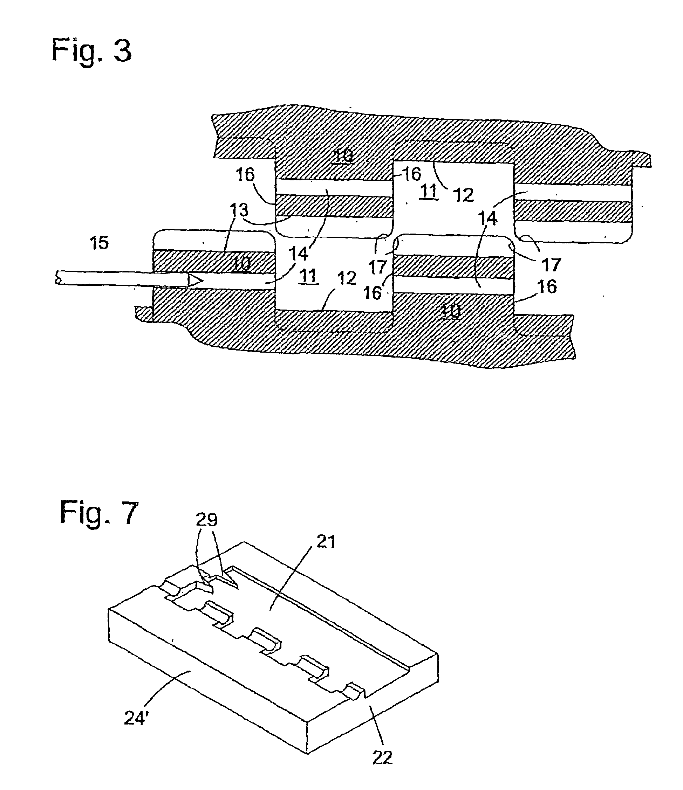

Die Zähne 10 und Zahnzwischenräume 11 ermöglichen es, zwei identisch geformte Profile vom in Fig. 1 gezeigten Typ ineinander zu fügen und aneinander zu verriegeln, wie anhand von Fig. 3 deutlich wird, die zwei solche Profile jeweils in einen Schnitt entlang einer durch die Federn 12 und Nuten 13 verlaufenden Längsmittelebene der Profile zeigt. Der Verlauf der Profile in einer zu den Schnittebene parallelen, unterhalb der Nuten 13 und Federn 12 verlaufenden zweiten Ebene ist in der Figur ebenfalls zu erkennen; der Verlauf in einer dritten Ebene oberhalb der Nuten 13 und Federn 12 ist mit dem in der zweiten Ebene identisch.

Um das Ineinanderschieben der Profile zu vereinfachen, sind die äußeren Ecken 17 der Zähne 10 jeweils abgerundet.

Wenn die Zähne 10 der zwei Profile korrekt inein andergreifen, fluchten all2 ihre Bohrungen 14, und ein Draht 15 kann durch die Bohrungen 14 hindurch geschoben werden, um die zwei Profile aneinander zu verriegeln. Da die seitlichen Flanken 16 der Zähne senkrecht zur Achse der Bohrungen 14 und parallel zu der Richtung, in der die Zähne 10 ineinander gesteckt werden, verlaufen, beeinträchtigt ein geringes Spiel der zwei Profile gegeneinander in der Steckrichtung nicht die Dichtigkeit der Verbindung; die Seitenflanken 16 stehen in engem Kontakt, egal, ob die Zähne bis zum Anschlag ineinandergeschoben sind oder ob bei eingeschobenem Draht 15 noch ein Restspiel zwischen den Stirnflächen der Zähne 10 und dem Boden der Zahnzwischenräume 11 bleibt. Ein solches Spiel führt, falls vorhanden, nicht zur Undichtigkeit der Verbindung aufgrund des Eingriffs der Nuten 13 und Federn 12.

In allen drei erwähnten Schnittebenen weisen die Profile somit einen periodischen Verlauf ähnlich einer Rechteckschwingung auf, wobei Periode und Phase der Schwingung in allen drei Schnittebenen gleich sind.

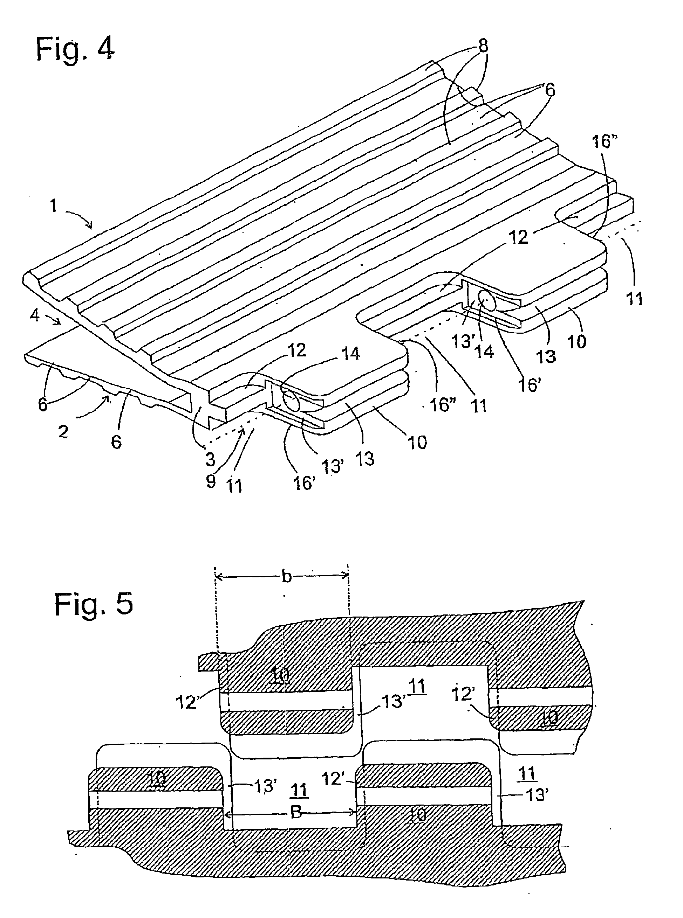

Fig. 4 und Fig. 5 zeigen jeweils eine perspektivische Ansicht eines einzelnen Profils bzw. zwei einander zugewandte Profile gemäß einer zweiten Ausgestaltung der Erfindung. Das Profil dieses zweiten Ausführungsbeispiels unterscheidet sich von dem der Figs. 1 und 3 dadurch, dass auch an den seitlichen Flanken 16', 16" jedes Zahns 10' eine Nut 13' bzw. eine Feder 12' gebildet ist. In Fig. 4 sind jeweils nur die Nuten 13' zu sehen, die Federn 12' befinden sich an den vom Betrachter abgewendeten Seitenflanken 16" der Zähne 10'. Die Nuten 13' und Federn 12' haben eine doppelte Funktion. Zum einen verbessern sie die Dichtigkeit des Eingriffs zwischen zwei Profilen, falls die Breite b der Zähne 10 geringfügig kleiner ist als die Breite B der Zahnzwischenräume 11, zum anderen führen die Nuten 13' und Federn 12' die Profile beim Zusammenstecken, so dass es einfacher ist, die Nuten 13 und die Federn 12 in Eingriff zu bringen als beim ersten Ausführungsbeispiel.

Wie in Fig. 5 zu erkennen, haben auch hier die einander zugewandten Seiten der Profile einen periodischen Verlauf ähnlich einer Rechteckschwingung, wobei allerdings hier aus der Existenz der Federn 12' und Nuten 13' eine geringfügige Phasenverschiebung zwischen dem Verlauf in der Längsmittelebene und dem in einer oberhalb bzw unterhalb der Nuten verlaufenden Schnittebene ergibt.

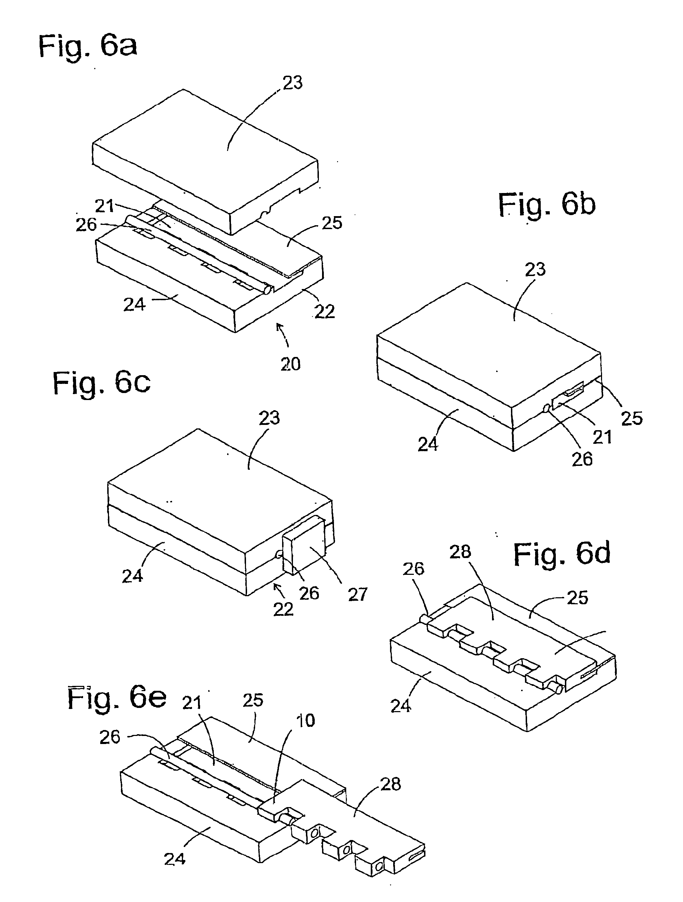

Die oben beschriebenen Profile eignen sich wegen des Vorhandenseins der Zähne 10 und Zahnzwischenräume 11 nicht zur Herstellung mit einem gewöhnlichen einfachen Extrusionsverfahren. Spritzgussfertigung ist zwar möglich, doch können damit nur jeweils Profilstücke mit einer durch die Abmessungen der Spritzform vorgegebenen, begrenzten Länge hergestellt werden. Folglich könnten auch nur solche Bahnen mit Hilfe der erfindungsgemäßen Profile verbunden werden, deren Breite nicht größer als die Länge der Profilstücke ist. Um derartige Einschränkungen zu vermeiden, ist es wünschenswert, die erfindungsgemäßen Profile in im Prinzip beliebiger Länge, als "Meterware" herstellen zu können, um anschließend von einem sehr langen Profilstrang Stücke jeweils in der zum Verbinden von zwei Bahnenden gegebener Breite benötigten Länge schneiden zu können. Ein Verfahren, das dies ermöglicht, wird im Folgenden anhand der Figs. 6a bis 6e erläutert.

Fig. 6a zeigt Teile einer zum Herstellen des erfindungsgemäßen Profils verwendeten Spritzgussform 20. Der Formhohlraum 21 der Spritzgussform 20 hat eine Länge von mehreren Zahn-Zahnzwischenraum-Perioden und ist an einer Stirnseite 22 offen. Die Spritzgussform 20 umfasst im Wesentlichen vier Teile, nämlich obere und untere Halbschale 23, 24, eine Lamelle 25, die von einer Längsseite der Form 20 her in den Formhohlraum 21 eingreift, um die Nut 4 zu bilden, und einen Draht 26, der zum Formen der Bohrungen 14 dient.

Fig. 6b zeigt die Spritzgussform 20 in einem teilweise geschlossenen Zustand. Die Lamelle 25 und der Draht 26 sind zwischen den zwei Halbschalen 23, 24 eingeklemmt.

Wie in Fig. 6 gezeigt, wird ein Deckel 27 an der Stirnseite 22 der Form 20 platziert, um die Öffnung des Formhohlraums 21 zu verschließen.

In den so erhaltenen Formhohlraum wird in an stich bekannter Weise flüssiges Kunststoffmaterial eingespritzt. Nach verfestigung des Kunststoffs wird die Form 20 geöffnet, wie in Fig. 6d gezeigt, Lamelle 25 und Draht 26 werden herausgezogen, so dass das erhaltene Profilstück 28 entnommen werden kann.

Anschließend wird es in Längsrichtung versetzt wieder in die Halbschale 24 eingefügt, wobei wenigstens ein Zahn 10 des Profilstücks 28 wieder in eine Zahnaussparung des Formhohlraums 21 eingefügt wird. Die Lamelle 25 und der Draht 26 werden wieder angefügt, so dass sich die in Fig. 6e gezeigte Konfiguration ergibt.

Nach Platzieren der oberen Halbschale 23 ist die Form für einen weiteren Spritzvorgang bereit, wobei diesmal der Deckel 27 nicht mehr benötigt wird, da das Profilstück 28 die stirnseitige Öffnung des Formhohlraums 21 verschließt. Das anschließend eingespritzte Kunststoffmaterial heftet sich beim Verfestigen an das bereits vorhandene Profilstück 28 an, so dass dieses durch wiederholte Spritzvorgänge eine im Prinzip beliebige Länge erreichen kann.

Fig. 7 zeigt die untere Halbschale 24' einer abgewandelten Ausgestaltung der Spritzgussform. An der von der offenen Stirnseite 22 abgewandten Seite des Formhohlraums 21 sind vorspringende Zacken 29 gebildet. Diese Zacken vergrößern die Kontaktfläche, auf der sich bei der Herstellung des Profils das bereits fertige Profilstück 28 und der jeweils in dem Form Hohlraum 21 neu gespritzte Abschnitt berühren, und damit die Haftung der einzelnen Abschnitte aneinander. Die nicht gezeigte obere Halbschale ist entsprechend ausgebildet.

Zur Vergrößerung der Kontaktfläche des bereits fertigen Profilstücks 28 mit dem neu gespritzen Abschnitt kann an der von der offenen Stirnseite 22 abgewandten Seite des Formhohlraums 21 grundsätzlich eine beliebige Profilierung vorgesehen sein. Diese muss nicht notwendiger Weise im Querschnitt dreieckige Zacken aufweisen, sondern kann beispielsweise auch ein Rechteckprofil aufweisen. Zur Verbesserung der Haftung zwischen dem bereits fertigen Profilstück 28 und dem neu gespritzten Abschnitt kann das bereits fertige Profilstück 28 vor dem Anspritzen des neue Abschnittes auch oberflächenbehandelt werden.

Außer durch Nähen können die erfindungsgemäßen Verbinderelemente bzw. die Verbinderanordnung auch beispielsweise durch Verkleben oder Verschweißen am Bahnende 5 angebracht werden. Für eine besonders dauerhafte Verbindung können diese Verbindungstechniken in beliebiger Weise kombiniert werden. So kann beispielsweise zumindest eine Naht vorgesehen sein und zusätzlich können die Schenkel 1, 2 mit dem Bahnende 5 verschweißt sein.

Für eine besonders sichere Verbindung der Bahnenden können zusätzlich oder alternativ zum Draht 15 an den Verbinderelementen auch Rastverbindungselement mit Widerhakenelementen vorgesehen sein. Diese Elemente können beispielsweise an der Nut 13, 13' und/oder an der Feder 12, 12' angeformt sein.

## Patentansprüche

1. Verbinderanordnung zum Verbinden von Bahnenden (5), insbesondere einer endlosen Filterbahn, mit zwei langgestreckten Elementen, die jeweils wenigstens einen langgestreckten Schenkel (1, 2) zur Befestigung an einem der Bahnenden (5) und eine von dem Bahnende (5) abgewandte Längsflanke (9) umfassen, die in einer ersten in Längsrichtung der Elemente und parallel zur Längsmittelebene verlaufenden Längsschnittebene eine erste Kontur aufweist, die in eine entsprechende Kontur des jeweils anderen Elements eingreift, wobei die Elemente in einer zu der ersten Längsschnittebene parallelen zweiten und dritten Längsschnittebene ferner zweite und dritte Konturen (10, 11) aufweisen, die in jeweils entsprechende Konturen (10, 11) des jeweils anderen Elements formschlüssig eingreifen,
**dadurch gekennzeichnet,**
**dass** die ersten bis dritten Konturen in einer ersten quer zur Längsrichtung verlaufenden Querschnittebene eine Nut (13, 13') und in einer zweiten quer zur Längsrichtung verlaufenden Querschnittsebene eine Feder (12, 12') bilden.

2. Verbinderanordnung nach Anspruch 1, **dadurch gekennzeichnet, dass** alle Konturen (10, 11) periodisch ausgebildet sind und insbesondere dieselbe Periode haben.

3. Verbinderanordnung nach Anspruch 1 oder 2, **dadurch gekennzeichnet, dass** die erste Längsschnittebene zwischen der zweiten und der dritten Längsschnittebene liegt und dass die zweiten und dritten Konturen deckungsgleich sind.

4. Verbinderanordnung nach Anspruch 2 und Anspruch 3,
**dadurch gekennzeichnet,**
**dass** die Konturen (10, 11) Rechteckkonturen sind.

5. Verbinderanordnung nach Anspruch 4,
**dadurch gekennzeichnet,**
**dass** die Konturen (10, 11) gleiche Phasen und unterschiedliche Amplituden haben.

6. Verbinderanordnung nach Anspruch 2,
**dadurch gekennzeichnet,**
**dass** die erste Längsschnittebene zwischen der zweiten und der dritten Längsschnittebene liegt und dass die erste Kontur in Bezug auf die zweite und die dritte Kontur einen Phasenversatz aufweist.

7. Verbinderanordnung nach einem der vorhergehenden Ansprüche,
**dadurch gekennzeichnet,**
**dass** die Konturen ineinandergreifende Zähne (10) der zwei Elemente definieren, dass jeder Zahn (10) eine Bohrung (14) in Längsrichtung seines Elements aufweist, und dass in einem ineinandergreifenden Zustand beider Elemente die Bohrungen (14) beider Elemente auf einer Linie liegen.

8. Verbinderanordnung nach Anspruch 7, bei der die Elemente mit Hilfe eines durch die Bohrungen (14) verlaufenden Drahtes (15) aneinander verriegelt sind.

9. Verbinderanordnung nach einem der vorhergehenden Ansprüche,
**dadurch gekennzeichnet,**
**dass** die Elemente kongruent sind.

10. Verbinderelement zum Verbinden von Bahnenden für eine Verbinderanordnung nach einem der vorhergehenden Ansprüche,
**dadurch gekennzeichnet,**
**dass** der Schenkel (1, 2) an einer Außenseite mit Rillen (6) versehen ist.

11. Verbinderelement nach Anspruch 10,
**dadurch gekennzeichnet,**
**dass** die Rillen (6) sich in Längsrichtung des Verbinderelements erstrecken.

12. Verbinderelement nach Anspruch 10 oder 11,
**dadurch gekennzeichnet,**
**dass** in den Rillen (6) Löcher durch den Schenkel (1, 2) gestochen sind.

13. Verbinderelement nach Anspruch 10, 11 oder 12,
**dadurch gekennzeichnet,**
**dass** ein Bahnende an dem Verbinderelement mit Hilfe eines in den Rillen (6) verlaufenden Fadens (7) vernäht ist.

14. Verbinderelement nach einem der Ansprüche 10 bis 13,
**dadurch gekennzeichnet,**
**dass** es zwei Schenkel (1, 2) aufweist, die eine Nut (4) zum Aufnehmen des Bahnendes (15) begrenzen.

15. Verbinderelement nach einem der Ansprüche 10 bis 14,
**dadurch gekennzeichnet,**
**dass** es aus Polyurethan, Polyamid oder Weich-PVC geformt ist.

16. Verfahren zum Herstellen eines Verbinderelements nach einem der Ansprüche 10 bis 15 und/oder für eine Verbinderanordnung nach einem der Ansprüche 1 bis 9, mit den Schritten:
a) Bereitstellen einer Spritzgussform (20), die geeignet ist, einen Abschnitt (28) des Verbinderelements darin zu formen, und die an einem Ende (22) des Abschnitts (28) offen ist;
b) Verschließen des offenen Endes (22);
c) Einspritzen von Material in die Form (20), um einen Abschnitt (28) des Verbinderelements zu erhalten;
d) zyklisches Wiederholen der Schritte b) und c), wobei zum Verschließen der Form (20) in Schritt b) jeweils der im vorhergehenden Schritt c) erhaltene Abschnitt (28) verwendet wird.

17. Verfahren nach Anspruch 16,
**dadurch gekenzeichnet**,
dass die Länge des Abschnitts (28) mehrere Perioden der periodischen Konturen umfasst, und dass zum Verschließen der Form (20) in Schritt d) ein Endstück des jeweils im vorhergehenden Schritt c) erhaltenen Abschnitts (28) in ein der Öffnung benachbartes Stück der Form eingefügt wird.

## Claims

1. Connector arrangement for connecting web ends (5), in particular an endless filter web, comprising two elongate elements, which each has at least one elongate leg (1, 2) for fastening at one of the web ends (5) and a longitudinal flank (9), which is directed away from the web end (5) and which has a first contour in a first longitudinal section plane extending in a longitudinal direction of the elements and being parallel to a longitudinal center plane, said first contour engages in a corresponding contour of the other respective elements, wherein the elements have in a second and third longitudinal section plane extending parallel to the first longitudinal section plane second and third contours (10, 11), which engage in a form-fitting manner in respective corresponding contours (10, 11) of the other respective element,
**characterized in that**
the first to third contours form a groove (13, 13') in a first cross-section plane extending transversely to the longitudinal direction and form a tongue (12, 12') in a second cross-section extending transversely to the longitudinal direction.

2. Connector arrangement according to claim 1,
**characterized in that**
all contours (10, 11) are designed periodically, having the same period in particular.

3. Connector arrangement according to claim 1 or 2,
**characterized in that**
the first longitudinal section plane lies between the second and the third longitudinal section plane and **in that** the second and the third contours are congruent.

4. Connector arrangement according to claim 2 and claim 3,
**characterized in that**
the contours (10, 11) are rectangular contours.

5. Connector arrangement according to claim 4,
**characterized in that**
the contours (10, 11) have the same phases and differing amplitudes.

6. Connector arrangement according to claim 2,
**characterized in that**
the first longitudinal section plane lies between the second and the third longitudinal section plane and **in that** the first contour has a phase shift with respect to the second and the third contour.

7. Connector arrangement according to any one of the preceding claims,
**characterized in that**
the contours define mutually engaging teeth (10) of the two elements, **in that** each tooth (10) has a borehole (14) in the longitudinal direction of its element and **in that** in a state of mutual engagement of both elements the boreholes (14) of both elements are in alignment.

8. Connector arrangement according to claim 7,
in which the elements are bolted to each other by means of a wire (15) extending through the boreholes (14).

9. Connector arrangement according to any one of the preceding claims,
**characterized in that**
the elements are congruent.

10. Connector element for connecting web ends
for a connector arrangement according to any one of the preceding claims,
**characterized in that**
the leg (1, 2) is provided with rills (6) along an exterior side.

11. Connector element according to claim 10,
**characterized in that**
the rills (6) extend in the longitudinal direction of the connector element.

12. Connector element according to claim 10 or 11,
**characterized in that**
in the rills (6) holes are pierced through the leg (1, 2).

13. Connector element according to claim 10, 11 or 12,
**characterized in that**
a web end is sewn to the connector element by means of a thread (7) extending in the rills (6).

14. Connector element according to any one of claims 10 to 13,
**characterized in that**
it has two legs (1, 2) that delimit a groove (4) for accommodating the web end (15).

15. Connector element according to any one of claims 10 to 14,
**characterized in that**
it is formed of polyurethane, polyamide or plasticized PVC.

16. Method for producing a connector element according to any one of claims 10 to 15 and/or for a connector arrangement according to any one of claims 1 to 9, comprising the steps:
a) Providing an injection mold (20) which is adapted to mold therein a section (28) of the connector element and which is opened to one end (22) of the section (28);
b) Sealing the open end (22);
c) Injecting material into the mold (20) in order to obtain a section (28) of the connector element;
d) Cyclically repeating steps b) and c), wherein for sealing the mold (20) in step b) the section (28) obtained each time in the preceding step c) is used.

17. Method according to claim 16,
**characterized in that**
the length of section (28) comprises several periods of the periodic contours and **in that** for sealing the mold (20) in step d) an end piece of the section (28) obtained each time in the preceding step c) is placed into a part of the mold located adjacent to the opening.

## Revendications

1. Système d'assemblage pour assembler des extrémités (5) de bande, en particulier d'une bande filtrante sans fin, avec deux éléments oblongs qui comprennent chacun au moins une branche (1, 2) oblongue pour se fixer sur l'une des extrémités (5) de bande et un flanc longitudinal (9) opposé à l'extrémité (5) de bande, qui présente, dans un premier plan de coupe longitudinale s'étendant dans la direction longitudinale des éléments et parallèlement au plan longitudinal médian, un premier contour qui s'engage dans un contour correspondant de l'autre élément respectif, les éléments présentant de plus, dans des deuxième et troisième plans de coupe longitudinale parallèles au premier plan de coupe longitudinale, des deuxième et troisième contours (10, 11) qui s'engagent par engagement positif dans des contours correspondants (10, 11) de l'autre élément respectif,
***caractérisé en ce que*** les premier à troisième contours forment une rainure (13, 13') dans un premier plan de coupe transversale s'étendant transversalement à la direction longitudinale et une languette (12, 12') dans un deuxième plan de coupe transversale s'étendant transversalement à la direction longitudinale.

2. Système d'assemblage selon la revendication 1, ***caractérisé en ce que*** tous les contours (10, 11) sont réalisés périodiques et présentent en particulier la même période.

3. Système d'assemblage selon la revendication 1 ou 2, ***caractérisé en ce que*** le premier plan de coupe longitudinale est situé entre les deuxième et troisième plans de coupe longitudinale et ***en ce que*** les deuxième et troisième contours se recouvrent à l'identique.

4. Système d'assemblage selon la revendication 2 et la revendication 3, ***caractérisé en ce que*** les contours (10, 11) sont des contours rectangulaires.

5. Système d'assemblage selon la revendication 4, ***caractérisé en ce que*** les contours (10, 11) ont des phases identiques et des amplitudes différentes.

6. Système d'assemblage selon la revendication 2, ***caractérisé en ce que*** le premier plan de coupe longitudinale est situé entre les deuxième et troisième plans de coupe longitudinale et ***en ce que*** le premier contour présente un décalage de phase par rapport aux deuxième et troisième contours.

7. Système d'assemblage selon l'une quelconque des revendications précédentes, ***caractérisé en ce que*** les contours définissent des dents (10) en prise mutuelle des deux éléments, ***en ce que*** chaque dent (10) présente un perçage dans la direction longitudinale de son élément, et ***en ce que**,* dans un état engrené des deux éléments, les perçages (14) des deux éléments se trouvent sur une ligne.

8. Système d'assemblage selon la revendication 7, ***caractérisé en ce que*** les éléments sont verrouillés l'un à l'autre à l'aide d'un fil (15) passant dans les perçages (14).

9. Système d'assemblage selon l'une quelconque des revendications précédentes, ***caractérisé en ce que*** les éléments sont congruents.

10. Élément d'assemblage pour assembler des extrémités de bande pour un système d'assemblage selon l'une quelconque des revendications précédentes, ***caractérisé en ce que*** la branche (1, 2) est munie de cannelures (6) sur une face extérieure.

11. Élément d'assemblage selon la revendication 10, ***caractérisé en ce que*** les cannelures (6) s'étendent dans la direction longitudinale de l'élément d'assemblage.

12. Élément d'assemblage selon la revendication 10 ou 11, ***caractérisé en ce que*** des trous sont percés à travers les branches (1, 2) dans les cannelures (6).

13. Élément d'assemblage selon la revendication 10, 11 ou 12, ***caractérisé en ce qu'***une extrémité de bande est cousue sur l'élément d'assemblage à l'aide d'un fil (7) s'étendant dans les cannelures (6).

14. Élément d'assemblage selon l'une quelconque des revendications 10 à 13, ***caractérisé en ce qu*'**il comprend deux branches (1, 2) qui délimitent une rainure (4) destinée à recevoir une extrémité (15) de bande.

15. Élément d'assemblage selon l'une quelconque des revendications 10 à 14, ***caractérisé en ce qu'***il est fabriqué en polyuréthane, en polyamide ou en PVC souple.

16. Procédé de fabrication d'un élément d'assemblage selon l'une quelconque des revendications 10 à 15 et/ou pour un système d'assemblage selon l'une quelconque des revendications 1 à 9, comprenant les étapes suivantes :
a) fourniture d'un moule à injection (20) qui convient pour y former une section (28) de l'élément d'assemblage et qui est ouvert à une extrémité (22) de la section (28);
b) fermeture de l'extrémité ouverte (22) ;
c) injection de matière dans le moule (20), afin d'obtenir une section (28) de l'élément d'assemblage ;
d) répétition cyclique des étapes b) et c), la section (28) obtenue à l'étape c) précédente étant utilisée à chaque fois pour fermer le moule (20) à l'étape b).

17. Procédé selon la revendication 16, ***caractérisé en ce que*** la longueur de la section (28) comprend plusieurs périodes des contours périodiques, et ***en ce que**,* pour fermer le moule (20) à l'étape d), une partie d'extrémité de la section (28) obtenue à l'étape précédente c) respective est insérée dans une partie du moule voisine de l'ouverture.
